(19) Europäisches Patentamt
European Patent Office
Office européen des brevets

(11) **EP 2 467 331 B1**

(12) **EUROPEAN PATENT SPECIFICATION**

(45) Date of publication and mention
of the grant of the patent:
**10.07.2013 Bulletin 2013/28**

(51) Int Cl.:
*C01G 19/00* (2006.01)      *C01G 30/00* (2006.01)
*C01B 13/34* (2006.01)

(21) Application number: **10720754.0**

(86) International application number:
**PCT/EP2010/056691**

(22) Date of filing: **17.05.2010**

(87) International publication number:
**WO 2010/145897 (23.12.2010 Gazette 2010/51)**

(54) **MIXED METAL OXIDE POWDER, ESPECIALLY ANTIMONY-TIN MIXED OXIDE POWDER, AND PREPARATION THEREOF**

Mischmetalloxidpulver, insbesondere Antimon-Zinn-Mischoxidpulver, und seine Herstellung

POUDRE MIXTE D'OXYDES METALLIQUES, EN PARTICULIER LA POUDRE MIXTE D'OXYDE D'ANTIMOINE-ETAIN ET SA FABRICATION

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **29.05.2009 DE 102009026599**

(43) Date of publication of application:
**27.06.2012 Bulletin 2012/26**

(73) Proprietor: **Evonik Degussa GmbH**
**45128 Essen (DE)**

(72) Inventors:
• **KATUSIC, Stipan**
  **65812 Bad Soden (DE)**
• **HILL, Sven**
  **63741 Aschaffenburg (DE)**
• **MEYER, Jürgen**
  **63811 Stockstadt (DE)**
• **KRESS, Peter**
  **63791 Karlstein (DE)**
• **WIEGAND, Armin**
  **63538 Großkrotzenburg (DE)**

(56) References cited:
**EP-A1- 1 378 489      WO-A1-2005/047009**
**WO-A1-2006/119653**

• **CAMENZIND ET AL: "Cubic or monoclinic Y2O3: Eu<3+> nanoparticles by one step flame spray pyrolysis" CHEMICAL PHYSICS LETTERS, NORTH-HOLLAND, AMSTERDAM LNKD- DOI: 10.1016/J.CPLETT.2005.09.002, vol. 415, no. 4-6, 11 November 2005 (2005-11-11), pages 193-197, XP005135781 ISSN: 0009-2614**

**Description**

The invention relates to a process for preparing mixed metal oxide powders, especially antimony-tin mixed oxide powders, by means of a spray pyrolysis process. The invention further relates to a process for preparing an antimony-tin mixed oxide powder and to the antimony-tin mixed oxide powder thus obtainable itself. The invention further relates to a specific antimony-tin mixed oxide powder and to the use thereof.

It is known that indium-tin mixed oxide can be used for the production of liquid-crystal displays, organic light-emitting diodes, touch screens, thin-film solar cells or else semiconductor sensors. In addition, the antistatic properties of indium tin oxide are being utilized. Owing to the high cost of indium and the only limited amounts available, there is a search for alternatives to indium tin oxide. A promising candidate is considered to be antimony tin oxide.

The prior art specifies, for the preparation of antimony-tin mixed oxide powders, wet-chemical processes, for example precipitation processes or sol-gel processes, and gas phase processes. The latter also includes spray pyrolysis processes, in which an aerosol is introduced into a high-temperature zone, vaporized and oxidized. For the known antimony-tin mixed oxide powders, the conductivity and the dispersibility in particular are features in need of improvement.

WO 2005/047009 mentions some parameters influencing the use of aerosol processes, but without showing what these influencing parameters should be in the preparation of antimony-tin mixed oxide.

EP-A-1378489 discloses a process for preparing mixed metal oxide powders by flame spray pyrolysis, in which the starting compounds of the metal oxide components are dissolved in at least one carboxylic acid having more than 2 carbon atoms, the proportion of the carboxylic acid being at least 60% of the solution. According to EP-A-1378489, when a carboxylic acid which contains, for example, only 2 carbon atoms is used, such as acetic acid, homogeneous distribution of the mixed oxide components is unachievable.

US 5984997 discloses a process for preparing mixed metal oxide powders, in which an emulsion consisting of a polar phase comprising the starting compounds of the mixed oxide components and a nonpolar phase in the form of a combustible liquid is combusted. However, US 5984997 gives no indications as to how the process should be conducted in order to obtain mixed metal oxide powders with high homogeneity, i.e. very substantially homogeneous mixing of the metal oxide components at the atomic level.

CAMENZIND ET AL: "Cubic or monoclinic Y2O3:Eu3+ nanoparticles by one step flame spray pyrolysis", CHEMICAL PHYSICS LETTERS, NORTH-HOLLAND, AMSTERDAM LNKD- DOI:10.1016/J.CPLETT.2005.09.002, vol. 415, no. 4-6, 11 November 2005 (2005-11-11), pages 193-197, ISSN: 0009-2614 discloses a method for production of $Y_2O_3$: $Eu^{3+}$ nanoparticles (<30 nm) containing 5 wt.% Eu. Y(III)2-ethylhexanoate solution comprising acetic anhydride that is mixed with Eu(III)2-ethylhexanoate to provide a solution with total metal concentration of 0.4 M. The precursor mixture is fed into a nozzle where a spray is formed. The spray is ignited by ignition of a mixture of oxygen and methane, producing nanosized $Y_2O_3$:$Eu^{3+}$ particles.

WO2006/119653 discloses a flame spray pyrolysis process for the production of mixed metal oxide, comprising acetic anhydride in the precursor mixture. As a metal carboxylate there is used barium 2-ethylhexanoate.

It was an object of the present invention to provide a process which allows the preparation of mixed metal oxide powders on the industrial scale without having the restrictions of the processes known in the prior art.

It was a further object of the present invention to provide an antimony-tin mixed oxide powder and a dispersion thereof with improved conductivity.

The invention provides a process for preparing a mixed metal oxide powder from two or more mixed oxide components which are present in the form of aggregated primary particles, comprising

-     the atomizing of a solution comprising the starting compounds of the mixed oxide components by means of an atomizing gas to form an aerosol,

-     the introducing of the aerosol into a flame formed by the ignition of a mixture of an oxygen-containing gas and a fuel gas,

-     the cooling of the hot gases and of the solid product

-     and the removing of the mixed metal oxide powder,

characterized in that

(a) the starting compounds of the mixed oxide components present in the solution are metal carboxylates of $C_1$-$C_5$-carboxylic acids, one or more starting compounds being present per mixed oxide component,

(b) the solution comprises one or more $C_1$-$C_5$-carboxylic anhydrides and

(c) the sum of the proportions of metal carboxylates in the solution, based in each case on the metal, is at least 20% by weight, preferably 20 to 50% by weight, more preferably 25 to 40% by weight.

The mixed metal oxide powder obtainable by the process according to the invention is predominantly or exclusively in the form of aggregated primary particles.

A mixed oxide powder shall be understood to mean a powder in which the mixed oxide components are intimately mixed at the atomic level.

The BET surface area of the powder can be varied over wide intervals. In general, the powder will have a BET surface area of 5 to 200 $m^2/g$, preferably 20 to 100 $m^2/g$.

The type and number of metals in the starting compounds present in the solution is unlimited, provided that it is ensured that they are dissolved and oxidizable at the time of atomization. In order to prevent or to redisssolve precipitates in the solution, it can be heated. The solutions used in the process according to the invention are notable in that they, in spite of a high content of metals, have a low viscosity and can be sprayed without any problem. This leads to a very substantially homogeneous distribution of the mixed oxide components at the atomic level with high throughput.

The metal component of the metal carboxylates present in the solution is preferably selected from the group consisting of antimony, indium, cerium, yttrium, tin and zirconium.

The process according to the invention is particularly suitable for preparing mixed metal oxide powders with two metal oxide components. Examples include the antimony/tin, indium/tin, cerium/zirconium and yttrium/zirconium combinations. The process according to the invention is particularly suitable for preparing antimony-tin mixed oxide powders.

The carboxylate components of the metal carboxylates present in the solution are $C_1$-$C_5$-carboxylates. The parent carboxylic acids of the carboxylates are preferably saturated, unsubstituted monocarboxylic acids. The carboxylates are more preferably metal acetates.

The $C_1$-$C_5$-carboxylic anhydrides are preferably the anhydrides of saturated unsubstituted monocarboxylic acids, such as acetic anhydride, propanoic anhydride, butanoic anhydride or pentanoic anhydride. They are more preferably acetic anhydride.

Even though the process according to the invention does not rule out the possibility that the parent carboxylic acids of the metal carboxylates and of the carboxylic anhydrides are different, it is appropriate from a preparative point of view when the components derive from one carboxylic acid, and they are, for example, metal acetates and acetic anhydride.

The solution used in the process according to the invention may comprise further constituents, for example $C_1$-$C_5$-carboxylic acids. They are preferably saturated unsubstituted monocarboxylic acids. These may form according to the way in which the solution is prepared. If the solution contains such a carboxylic acid, it is generally the parent carboxylic acid of the carboxylic anhydride. For acetic anhydride, for example, this is acetic acid. In the case that the solution comprises one or more carboxylic acids, the carboxylic acid/carboxylic anhydride ratio, in mol/mol, is less than 1, preferably less than 0.6.

The process according to the invention is particularly suitable for preparing antimony-tin mixed oxide powders.

It is possible with preference to prepare antimony-tin mixed oxide powders in which the tin/antimony weight ratio, in each case calculated as the metal, is 80:20 to 99.5:0.5, particular preference being given to a range from 90:10 to 96:4. This affords powders with the best conductivity values.

A particularly suitable solution has been found to be one which comprises dibutyltin diacetate, antimony acetate and acetic anhydride.

The solution preferably comprises, in total, 70 to 97% by weight of dibutyltin diacetate and antimony acetate, and 3 to 30% by weight of acetic anhydride. In spite of a high metal content, such a solution has a low viscosity.

In the process according to the invention, an aerosol obtained by atomizing the solution is combusted in a flame formed by the ignition of a mixture of an oxygen-containing gas and a fuel gas. The oxygen-containing gas may preferably be air or oxygen-enriched air. The fuel gas used may, for example, be hydrogen, methane, ethane, propane, butane, natural gas or mixtures thereof. Particular preference is given to hydrogen.

It may be advantageous for the combustion of the aerosol to perform the process in such a way that lambda, defined as the molar ratio of oxygen present in the oxygen-containing gas/oxygen needed for combustion of the fuel gas and for oxidation of the solution, is 2.0 to 5.0, more preferably 2.5 to 4.5.

The invention further provides an antimony-tin mixed oxide powder which

a) has an Sn/Sb weight ratio of 90:10 to 98:2, preferably 93:7 to 96:4, and

b) a BET surface area of 40 to 90 $m^2/g$, preferably 50 to 70 $m^2/g$,

c) is present in the form of aggregated primary particles which have a very substantially homogeneous distribution of antimony and tin at the molecular level, and has

d) a $d_{50}$ of less than 150 nm, preferably 50 to 110 nm,

e) a $d_{90}$ of less than 200 nm, preferably 120 to 170 nm,

f) a charge carrier density $N_L$ of at least $2.2 \times 10^{18}$ cm$^{-3}$, preferably 2.2 to $3.5 \times 10^{18}$ cm$^{-3}$, more preferably 2.4 to $3.2 \times 10^{18}$ cm$^{-3}$, and

g) a minimum specific resistivity of less than 200 ohm x cm, preferably of less than 100 ohm x cm, more preferably less than 50 ohm x cm.

Very substantially homogeneous distribution at the molecular level is understood to mean that the relative difference in the determination of the chemical content of the metals in the powder and the determination of the metal contents of individual primary particles by means of TEM-EDX (TEM = Transmission Electron Microscopy; EDX = Energy-Dispersive X-Ray Analysis) is not more than 10% in relative terms, preferably not more than 5% in relative terms. No discrete tin oxide particles or antimony oxide particles are detected.

The invention further provides a dispersion comprising the inventive antimony-tin mixed oxide powder.

The inventive dispersion may have a $d_{50}$ particle size distribution, determined by means of dynamic light scattering, of less than 150 nm, more preferably less than 100 nm. If appropriate, a coarse particle removal can be carried out.

It may additionally have a $d_{90}$ particle size distribution, determined by means of dynamic light scattering, of less than 200 nm, more preferably less than 160 nm.

It may additionally have a $d_{99}$ particle size distribution, determined by means of dynamic light scattering, of less than 300 nm, more preferably less than 200 nm.

The content of antimony-tin mixed oxide powder can be varied over wide intervals. More particularly, highly filled dispersions with a content of 15 to 40% by weight, more preferably of 20 to 30% by weight are possible, which possess sufficient stability to sedimentation or gelation. "Sufficient stability" shall be understood to mean that no visible sedimentation or gelation has occurred in the course of storage for at least 2 months.

The liquid phase of the dispersion may either be aqueous or organic.

Suitable organic solutions, as liquid phases or constituents of liquid phases, may be

- alcohols having 1 to 8 carbon atoms, especially methanol, ethanol, n-propanol and i-propanol, butanol, octanol, cyclohexanol,
- ketones having 1 to 8 carbon atoms, especially acetone, butanone and cyclohexanone,
- esters, especially ethyl acetate and glycol esters,
- ethers, especially diethyl ether, dibutyl ether, anisole, dioxane, tetrahydrofuran and tetrahydropyran,
- glycol ethers, especially mono-, di-, tri- and polyglycol ethers,
- glycols, especially ethylene glycol, diethylene glycol and propylene glycol,
- amides and other nitrogen compounds, especially dimethylacetamide, dimethylformamide, pyridine, N-methylpyrrolidine and acetonitrile,
- sulphoxides and sulphones, especially sulpholane and dimethyl sulphoxide,
- nitro compounds such as nitrobenzene,
- halohydrocarbons, especially dichloromethane, chloroform, carbon tetrachloride, tri- and tetrachloroethene, ethylene chloride and chlorofluorocarbons,
- aliphatic, alicyclic or aromatic hydrocarbons having 5 to 15 carbon atoms, especially pentane, hexane, heptane and octane, cyclohexane, benzine, petroleum ether, methylcyclohexane, decalin, benzene, toluene and xylenes. Particular preference may be given to ethanol, n- and i-propanol and ethylene glycol.

Equally possible are mixtures of water and organic solvents, provided that the liquid phase is monophasic.

In addition, the dispersion may comprise acids, bases or salts. Suitable acids may be either mineral acids or else organic acids, for example substituted or unsubstituted monocarboxylic, dicarboxylic, hydroxycarboxylic or polycarboxylic acids. Mixtures of the acids mentioned are also possible.

Examples include hydrochloric acid, phosphoric acid, nitric acid, sulphuric acid, acetic acid, propionic acid, butyric acid, pentanoic acid, hexanoic acid, acrylic acid, methacrylic acid, crotonic acid, citric acid, adipic acid, succinic acid, glutaric acid, oxalic acid, maleic acid, fumaric acid, monoethercarboxylic acids and polyethercarboxylic acids and oxacarboxylic acids. The oxacarboxylic acids are preferably 3,6-dioxaheptanoic acid and 3,6,9-trioxadecanoic acid.

Suitable bases may be sodium hydroxide solution, potassium hydroxide solution, ammonia, ammonium hydroxide, tetraalkylammonium hydroxides, mono- and polyamines of the general formula $(C_1\text{-}C_{12}\text{-alkyl})_{3-n}NH_n$, where n = 0, 1 or 2 and the $C_1$-$C_{12}$-alkyl radicals are each independently preferably $C_1$-$C_6$-alkyl and more preferably $C_1$-$C_4$-alkyl, for example methyl, ethyl, n-propyl and i-propyl and butyl. Examples are methylamine, dimethylamine, trimethylamine, ethylamine, aniline, N-methylaniline, diphenylamine, triphenylamine, toluidine, ethylenediamine, diethylenetriamine.

The pH of the dispersion may assume values of 2 to 12. It has been found that, surprisingly, stable dispersions can be obtained even at a basic pH of 8.5 to 10.

The invention further provides for the use of the antimony-tin mixed oxide powder or of the dispersion for producing electrically conductive paints and coatings, solar cells, IR and UV absorbers, and in medical technology.

## Examples

Analysis:

Particle size distribution $d_{50}/d_{90}$: the particle size distribution is determined in a 1 per cent dispersion of the powder in water by means of dynamic light scattering (Horiba LB 500).

Minimum specific resistivity: the specific electrical resistivity of the powders is measured at room temperature and 40% relative humidity as a function of the pressed density. For this purpose, the sample is placed between two movable electrodes and, after the application of a direct current, the current flow is determined. Then the density of the powder is increased stepwise by reducing the electrode separation and resistivity is measured again. The measurement is effected to DIN IEC 93. The minimum specific resistivity is obtained at a substance-dependent maximum pressed density.

Determination of the charge carrier density: The charge carrier density is calculated from MIR/NIR transmission spectra using the position of the plasmon frequency (vibration frequency of the conduction electrons). The following relationship applies:

$$\omega_P = \sqrt{\frac{N_L e^2}{e_0 e_{el} m^*}}$$

where $\omega_P$ = plasmon frequency, $N_L$ = charge carrier density, $m^*$ = reduced mass of the electron, $m^*_{ATO}$ = 0.27 x me, ATO = antimony tin oxide, $e_{e1}$ = 1.

## Solutions used

Solution 1 consists of
76.20% by weight of dibutyltin diacetate, 2.77% by weight of antimony(III) acetate, 16.03% by weight of acetic anhydride and 5.00% by weight of acetic acid.

Solution 2 consists of
74.78% by weight of dibutyltin diacetate, 2.94% by weight of antimony(III) acetate, 17.28% by weight of acetic anhydride and 5.00% by weight of acetic acid.

Solution 3 consists of
75.56% by weight of dibutyltin diacetate, 2.97% by weight of antimony(III) acetate, 16.47% by weight of acetic anhydride and 5.00% by weight of acetic acid.

Solution 4 consists of
87.87% by weight of dibutyltin diacetate, 8.11% by weight of antimony(III) acetate and 4.02% by weight of acetic anhydride.

Solution 5 consists of
75.56% by weight of dibutyltin diacetate, 2.61% by weight of antimony(III) acetate, 16.82% by weight of acetic anhydride and 5.00% by weight of acetic acid.

Solution 6 consists of
43.52% by weight of dibutyltin diacetate, 3.14% by weight of antimony(III) acetate and 53.33% by weight of acetic acid.

Example 1: 900 g/h of solution 1 are atomized by means of a two-substance nozzle with 4.0 m³ (STP)/h of atomizer air. The resulting droplets have a droplet size spectrum $d_{30}$ of 5 to 15 μm. The droplets are combusted in a flame formed from hydrogen (2.5 m³ (STP)/h) and air (24.0 m³ (STP)/h), corresponding to a lambda of 4.1, into a reaction chamber. The temperature 0.5 m below the flame is 680°C. Subsequently, the hot gases and the solid products are cooled in a cooling zone. The resulting solid is separated out at filters.

Example 2 is carried out with the same solution as in Example 1, but with a higher proportion of hydrogen and nitrogen instead of air as the atomizer gas.

Example 3 is carried out like Example 1, except using solution 2, an increased throughput and nitrogen instead of air as the atomizer gas.

Example 4 is carried out analogously to Example 1, except using solution 3 and an increased throughput.

Example 5 is carried out analogously to Example 1, but using solution 4 with a very high total metal content and increased throughput.

Example 6 (comparative example) is carried out analogously to Example 1 with a comparable throughput, except that the metal content of the solution is only 16% by weight. The resulting powder has a significantly increased resistivity. The feedstocks and amounts used are compiled in Table 1, and the physicochemical properties of the powders obtained in Table 2.

Example 7: 26 g of the antimony-tin mixed oxide powder from Example 1 are added to 88 g of water and 0.5 g of ammonium hydroxide solution (12.5% by weight), and dispersed by means of an ultrasound dispersing unit (model: Hielscher UP400S, power 100%, cycle 1) over a period of 8 min. Subsequently, coarse particles are removed by centrifugation.

A 21 per cent by weight dispersion with a $d_{50}$ of the particle size distribution of 79 nm, a $d_{90}$ of 128 nm and a $d_{99}$ of 185 nm is obtained. The pH of the dispersion is 9.

Example 8: 16.2 g of the antimony-tin mixed oxide powder from Example 1 are added to 40.6 g of ethanol, 2.59 g of KOH (5 per cent solution in ethanol) and 0.65 g of 3,6,9-trioxadecanoic acid, and dispersed by means of an ultrasound dispersing unit (model: Hielscher UP400S, power 100%, cycle 1) over a period of 8 min. Subsequently, coarse particles are removed by centrifugation.

A 25 per cent by weight dispersion with a $d_{50}$ of the particle size distribution of 86 nm, a $d_{90}$ of 138 nm and a $d_{99}$ of 190 nm is obtained.

**Table 1: Amounts of feedstock and reaction parameters**

| Example | | 1 | 2 | 3 | 4 | 5 | 6[d)] |
|---|---|---|---|---|---|---|---|
| **Solution** | | | | | | | |
| Total metal (Sb+Sn) | % by wt. | 26.90 | 26.90 | 26.62 | 26.90 | 33.02 | 16.00 |
| Sb:Sn ratio | | 4.2:95.8 | 4.2:95.8 | 5:95 | 5:95 | 10:90 | 8:92 |
| Dibutyltin diacetate | % by wt. | 76.20 | 76.20 | 74.78 | 75.56 | 87.87 | 43.52 |
| Antimony(III) acetate | % by wt. | 2.77 | 2.77 | 2.94 | 2.97 | 8.11 | 3.14 |
| Acetic anhydride | % by wt. | 16.19 | 16.01 | 17.21 | 16.51 | 4.02 | 0.00 |
| Acetic acid | % by wt. | 4.84 | 5.02 | 5.07 | 4.96 | 0.00 | 53.33 |
| Throughput | g/h | 900 | 900 | 1500 | 1200 | 1200 | 1000 |
| **Gases** | | | | | | | |
| Hydrogen | m³ (STP)/h | 2.5 | 3.0 | 3.0 | 3.0 | 2.8 | 3.0 |
| Air | m³ (STP)/h | 24.0 | 24.0 | 24.0 | 25.0 | 24.0 | 25.0 |
| Atomizer gas | | 4.0[a)] | 2.0[b)] | 2.0[b)] | 3.0[a)] | 2.0[a)] | 2.0[a)] |
| | | | | | | | |
| Lambda | | 4.1 | 2.9 | 2.6 | 3.3 | 3.3 | 3.2 |

(continued)

| Gases | | | | | | | |
|---|---|---|---|---|---|---|---|
| Temperature[c] | °C | 680 | 700 | 800 | 850 | 920 | 800 |
| a) air; b) nitrogen; c) 0.5 m below flame; d) comparative example | | | | | | | |

**Table 2: Physicochemical data of the powders from Examples 1 to 6**

| Example | | 1 | 2 | 3 | 4 | 5 | 6[c] |
|---|---|---|---|---|---|---|---|
| Tin oxide (powder)[a] | % by wt. | 95.8 | 95.8 | 95.0 | 95.0 | 90.0 | 92.0 |
| Antimony oxide (powder)[a] | % by wt. | 4.2 | 4.2 | 5.0 | 5.0 | 10.0 | 8.00 |
| Antimony oxide (primary particles)[b] | % by wt. | 4.6 | 4.4 | 5.3 | 4.9 | 10.4 | 7.0 |
| BET surface area | $m^2/g$ | 71 | 64 | 46 | 51 | 42 | 55 |
| Charge carrier density | $N_L/cm^3$ | 2.29 | 2.42 | 2.37 | 2.82 | 3.02 | 2.01 |
| Maximum pressed density | $g/cm^3$ | 1.8 | 1.7 | 1.9 | 1.7 | 1.9 | 1.7 |
| Minimum specific resistivity | ohm*cm | 164 | 94 | 42 | 25 | 18 | 420 |
| $d_{50}/d_{90}$ | nm | 63/110 | 92/148 | 70/120 | 102/160 | 106/163 | 110/210 |
| Carbon | % by wt. | 0.48 | 0.38 | 0.30 | 0.20 | 0.25 | n.d. |
| Bulk density | g/l | 65 | 60 | 70 | 62 | 58 | n.d. |
| Colour              L | | 40.6 | 49.9 | 54.9 | 51.3 | 57.7 | 52.4 |
| a | | -3.1 | -3.9 | -5.5 | -3.1 | -6.0 | 4.3 |
| b | | -8.1 | -5.1 | -10.4 | -2.2 | -9.0 | -2.3 |
| Visible | | blue | blue | blue | blue | blue | grey |
| a) Chemical analysis; b) TEM-EDX; c) comparative example; n.d. = not determined | | | | | | | |

## Claims

1. Process for preparing a mixed metal oxide powder, comprising

   - the atomizing of a solution comprising the starting compounds of the mixed oxide components by means of an atomizing gas to form an aerosol,
   - the introducing of the aerosol into a flame formed by the ignition of a mixture of an oxygen-containing gas and a fuel gas,
   - the cooling of the hot gases and of the solid product and
   - the removing of the mixed metal oxide powder,

   **characterized in that**

   a) the starting compounds of the mixed oxide components present in the solution are metal carboxylates of $C_1$-$C_5$-carboxylic acids, one or more starting compounds being present per mixed oxide component,
   b) the solution comprises one or more $C_1$-$C_5$-carboxylic anhydrides and
   c) the sum of the proportions of metal carboxylates in the solution, based in each case on the metal, is at least 20% by weight.

2. Process according to Claim 1,
   **characterized in that**
   the metal component of the metal carboxylate is selected from the group consisting of antimony, indium, cerium, yttrium, tin and zirconium.

3. Process according to Claim 1 or 2,
**characterized in that**
the solution additionally comprises one or more $C_1$-$C_5$-carboxylic acids.

4. Process according to Claim 1,
**characterized in that**
the metal components of the metal carboxylates are antimony and tin.

5. Process according to Claim 4,
**characterized in that**
the tin/antimony weight ratio, in each case as the metal, is 80:20 to 99.5:0.5.

6. Process according to Claim 4 or 5,
**characterized in that**
the solution comprises dibutyltin diacetate, antimony acetate and acetic anhydride.

7. Process according to Claim 6,
**characterized in that**
the solution, in total, comprises 70 to 97% by weight of dibutyltin diacetate and antimony acetate, and 3 to 30% by weight of acetic anhydride.

8. Process according to Claims 1 to 7,
**characterized in that**
lambda, defined as the molar ratio of oxygen present in the oxygen-containing gas/oxygen needed for combustion of the fuel gas and for oxidation of the solution, is 2.0 to 5.0.

9. Antimony-tin mixed oxide powder,
**characterized in that** it

a) has an Sn/Sb weight ratio of 90:10 to 98:2 and
b) a BET surface area of 40 to 90 $m^2$/g,
c) is present in the form of aggregated primary particles which have a very substantially homogeneous distribution of antimony and tin at the molecular level, and has
d) a $d_{50}$ of less than 150 nm,
e) a $d_{90}$ of less than 200 nm,
f) a charge carrier density $N_L$ of at least $2.2 \times 10^{18}$ $cm^{-3}$ and
g) a minimum specific resistivity of less than 200 ohm x cm.

10. Dispersion comprising the antimony-tin mixed oxide powder according to Claim 9.

11. Dispersion according to Claim 10,
**characterized in that**
the $d_{50}$ particle size distribution, determined by means of dynamic light scattering, is less than 150 nm.

12. Dispersion according to Claim 10 or 11,
**characterized in that**
the content of antimony-tin mixed oxide powder is 15 to 40% by weight.

13. Dispersion according to Claims 10 to 12,
**characterized in that**
its pH is 8.5 to 10.

14. Use of the antimony-tin mixed oxide powder according to Claim 9 or of the dispersion according to Claims 10 to 13 for producing electrically conductive paints and coatings, solar cells, IR and UV absorbers, and in medical technology.

**Patentansprüche**

1. Verfahren zur Herstellung eines Metallmischoxidpulvers, umfassend

   - das Verdüsen einer die Ausgangsverbindungen der Mischoxidkomponenten enthaltenden Lösung mittels eines Verdüsungsgases unter Bildung eines Aerosoles,
   - das Einbringen des Aerosoles in eine Flamme gebildet durch die Zündung eines Gemisches aus einem Sauerstoff enthaltenden Gas und einem Brenngas,
   - das Abkühlen der heißen Gase und des festen Produktes und
   - das Abtrennen des Metallmischoxidpulvers,

   **dadurch gekennzeichnet, dass**

   a) die in der Lösung vorliegenden Ausgangsverbindungen der Mischoxidkomponenten Metallcarboxylate von $C_1$-$C_5$-Carbonsäuren sind, wobei ein oder mehrere Ausgangsverbindungen pro Mischoxidkomponente vorliegen,
   b) die Lösung ein oder mehrere $C_1$-$C_5$-Carbonsäureanhydride enthält und
   c) die Summe der Anteile an Metallcarboxylaten in der Lösung, jeweils bezogen auf das Metall, wenigstens 20 Gew.-% beträgt.

2. Verfahren nach Anspruch 1,
   **dadurch gekennzeichnet, dass**
   die Metallkomponente der Metallcarboxylate ausgewählt ist aus der Gruppe bestehend aus Antimon, Indium, Cer, Yttrium, Zinn und Zirkonium.

3. Verfahren nach den Ansprüchen 1 oder 2,
   **dadurch gekennzeichnet, dass**
   die Lösung zusätzlich ein oder mehrere $C_1$-$C_5$-Carbonsäuren enthält.

4. Verfahren nach Anspruch 1,
   **dadurch gekennzeichnet, dass**
   die Metallkomponenten der Metallcarboxylate Antimon und Zinn sind.

5. Verfahren nach Anspruch 4,
   **dadurch gekennzeichnet, dass**
   das Gewichtsverhältnis Zinn/Antimon, jeweils als Metall, 80:20 bis 99,5:0,5 ist.

6. Verfahren nach den Ansprüchen 4 oder 5,
   **dadurch gekennzeichnet, dass**
   die Lösung Dibutylzinndiacetat, Antimonacetat und Essigsäureanhydrid enthält.

7. Verfahren nach Anspruch 6,
   **dadurch gekennzeichnet, dass**
   die Lösung, in Summe, 70 bis 97 Gew.-% Dibutylzinndiacetat und Antimonacetat, und 3 bis 30 Gew.-% Essigsäureanhydrid enthält.

8. Verfahren nach den Ansprüchen 1 bis 7,
   **dadurch gekennzeichnet, dass**
   lambda, definiert als das molare Verhältnis vorhandener Sauerstoff im Sauerstoff enthaltenden Gas / zur Verbrennung des Brenngases und zur Oxidation der Lösung notwendiger Sauerstoff, 2,0 bis 5,0 ist.

9. Antimon-Zinn-Mischoxidpulver,
   **dadurch gekennzeichnet, dass** es

   a) ein Gewichtsverhältnis Sn/Sb von 90:10 bis 98:2, und
   b) eine BET-Oberfläche von 40 bis 90 m$^2$/g aufweist,
   c) in Form von aggregierten Primärpartikeln vorliegt, die eine weitestgehend homogene Verteilung von Antimon und Zinn auf molekularer Ebene aufweisen,

d) einen $d_{50}$-Wert von weniger als 150 nm,
e) einen $d_{90}$-Wert von weniger als 200 nm,
f) eine Ladungsträgerdichte $N_L$ von mindestens $2,2 \times 10^{18}$ cm$^{-3}$ und
g) einen minimalen spezifischen Widerstand von weniger als 200 Ohm x cm aufweist.

**10.** Dispersion enthaltend das Antimon-Zinn-Mischoxidpulver gemäß Anspruch 9.

**11.** Dispersion nach Anspruch 10,
**dadurch gekennzeichnet, dass**
die $d_{50}$-Partikelgrößenverteilung, bestimmt mittels dynamischer Lichtstreuung, weniger als 150 nm beträgt.

**12.** Dispersion nach den Ansprüchen 10 oder 11,
**dadurch gekennzeichnet, dass**
der Gehalt an Antimon-Zinn-Mischoxidpulver 15 bis 40 Gew.-% beträgt.

**13.** Dispersion nach den Ansprüchen 10 bis 12,
**dadurch gekennzeichnet, dass**
ihr pH-Wert 8,5 bis 10 beträgt.

**14.** Verwendung des Antimon-Zinn-Mischoxidpulvers gemäß des Anspruches 9 oder der Dispersion gemäß der Ansprüche 10 bis 13 zur Herstellung von elektrischleitfähigen Lacken und Beschichtungen, Solarzellen, IR-und UV-Absorbern und in der Medizintechnik.

## Revendications

**1.** Procédé pour la préparation d'une poudre d'oxyde métallique mixte, comprenant

- l'atomisation d'une solution comprenant les composés de départ des composants d'oxyde mixte au moyen d'un gaz d'atomisation pour former un aérosol,
- l'introduction de l'aérosol dans une flamme formée par l'inflammation d'un mélange d'un gaz contenant de l'oxygène et d'un gaz combustible,
- le refroidissement des gaz chauds et du produit solide et
- le retrait de la poudre d'oxyde métallique mixte,

**caractérisé en ce que**

a) les composés de départ des composants d'oxyde mixte présents dans la solution sont des carboxylates métalliques d'acides carboxyliques en $C_1$-$C_5$, un ou plusieurs composés de départ étant présents pour un composant d'oxyde mixte,
b) la solution comprend un ou plusieurs anhydrides carboxyliques en $C_1$-$C_5$ et
c) la somme des proportions de carboxylates métalliques dans la solution, sur la base dans chaque cas du métal, est d'au moins 20 % en poids.

**2.** Procédé selon la revendication 1,
**caractérisé en ce que**
le composant métallique du carboxylate métallique est choisi dans le groupe constitué par l'antimoine, l'indium, le cérium, l'yttrium, l'étain et le zirconium.

**3.** Procédé selon la revendication 1 ou 2,
**caractérisé en ce que**
la solution comprend de plus un ou plusieurs acides carboxyliques en $C_1$-$C_5$.

**4.** Procédé selon la revendication 1,
**caractérisé en ce que**
les composants métalliques des carboxylates métalliques sont l'antimoine et l'étain.

**5.** Procédé selon la revendication 4,

**caractérisé en ce que**
le rapport pondéral étain/antimoine, dans chaque cas en termes du métal, est de 80:20 à 99,5:0,5.

6. Procédé selon la revendication 4 ou 5,
**caractérisé en ce que**
la solution comprend du diacétate de dibutylétain, de l'acétate d'antimoine et de l'anhydride acétique.

7. Procédé selon la revendication 6,
**caractérisé en ce que**
la solution, au total, comprend 70 à 97 % en poids de diacétate de dibutylétain et d'acétate d'antimoine et 3 à 30 % en poids d'anhydride acétique.

8. Procédé selon les revendications 1 à 7,
**caractérisé en ce que**
lambda, défini comme le rapport molaire oxygène présent dans le gaz contenant de l'oxygène/oxygène nécessaire pour la combustion du gaz combustible et pour l'oxydation de la solution, est de 2,0 à 5,0.

9. Poudre d'oxyde mixte d'antimoine-étain, **caractérisée en ce qu'**elle

   a) a un rapport pondéral Sn/Sb de 90:10 à 98:2 et
   b) une surface spécifique BET de 40 à 90 $m^2$/g,
   c) est présente sous la forme de particules primaires agglomérées qui ont une distribution dans une très grande mesure homogène d'antimoine et d'étain au niveau moléculaire et a
   d) un $d_{50}$ inférieur à 150 nm,
   e) un $d_{90}$ inférieur à 200 nm,
   f) une densité de porteurs de charge $N_L$ d'au moins $2,2 \times 10^{18}$ $cm^{-3}$ et
   g) une résistivité spécifique minimale inférieure à 200 ohm x cm.

10. Dispersion comprenant la poudre d'oxyde mixte d'antimoine-étain selon la revendication 9.

11. Dispersion selon la revendication 10,
**caractérisée en ce que**
la distribution de la taille des particules $d_{50}$, déterminée au moyen de la diffusion dynamique de la lumière, est inférieure à 150 nm.

12. Dispersion selon la revendication 10 ou 11,
**caractérisée en ce que**
la teneur en poudre d'oxyde mixte d'antimoine-étain est de 15 à 40 % en poids.

13. Dispersion selon les revendications 10 à 12,
**caractérisée en ce que**
son pH est de 8,5 à 10.

14. Utilisation de la poudre d'oxyde mixte d'antimoine-étain selon la revendication 9 ou de la dispersion selon les revendications 10 à 13 pour la production de peintures et revêtements électriquement conducteurs, de cellules solaires, d'absorbeurs d'IR et d'UV et en technologie médicale.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005047009 A
- EP 1378489 A
- US 5984997 A
- WO 2006119653 A

**Non-patent literature cited in the description**

- **CAMENZIND et al.** Cubic or monoclinic Y2O3:Eu3+ nanoparticles by one step flame spray pyrolysis. *CHEMICAL PHYSICS LETTERS, NORTH-HOLLAND,* 11 November 2005, vol. 415 (4-6), 193-197